Europäisches Patentamt

European Patent Office

Office européen des brevets

(19)

(11) Publication number: **0 215 419 B1**

(12) **EUROPEAN PATENT SPECIFICATION**

(45) Date of publication of patent specification: **15.05.91**   (51) Int. Cl.⁵: **B01L 3/00**, G01N 1/00

(21) Application number: **86112429.5**

(22) Date of filing: **08.09.86**

(54) **Volume metering capillary gap device for applying a liquid sample onto a reactive surface.**

(30) Priority: **18.09.85 US 777273**

(43) Date of publication of application:
**25.03.87 Bulletin  87/13**

(45) Publication of the grant of the patent:
**15.05.91 Bulletin  91/20**

(84) Designated Contracting States:
**DE FR GB IT SE**

(56) References cited:
**EP-A- 0 057 110        EP-A- 0 153 110
US-A- 3 690 836        US-A- 4 254 083
US-A- 4 271 119        US-A- 4 323 536
US-A- 4 413 407**

(73) Proprietor: **MILES INC.
1127 Myrtle Street
Elkhart Indiana 46514(US)**

(72) Inventor: **Blatt, Joel M.
17100 Barryknoll Way
Granger Indiana 46530(US)**
Inventor: **Heiland, Robert
57325 Osage Drive
Goshen Indiana 46526(US)**
Inventor: **Morris, James R.
1141 E. Fairview Avenue
South Bend Indiana 46614(US)**
Inventor: **Pugh, Jerry T.
3101 Crabtree Lane
Elkhart Indiana 46514(US)**
Inventor: **Wogoman, Frank W.
209 S. Tuxedo Drive
South Bend Indiana 46615(US)**

(74) Representative: **Dänner, Klaus, Dr. et al
c/o Bayer AG Konzernverwaltung RP Paten-
tabteilung
W-5090 Leverkusen 1 Bayerwerk(DE)**

## Description

The present invention relates to a device and method for distribution of a liquid sample in controlled and predetermined flow patterns and, more particularly, to a device and method that permits rapid and uniform distribution of a defined volume of a liquid test specimen onto a reactive surface which enables visual or other sensing means to ascertain the presence of a sought after component in the liquid sample and/or the amount of said component.

Analytical elements have been known for many years. The chemical analysis of liquids such as water, foodstuffs, such as milk, as well as biological fluids such as blood and urine are often desirable or necessary for the health and welfare of any population. Many different designs of test elements to facilitate analyses have been developed in the past. Some are suitable for liquid analysis which require the addition of a liquid reagent for a substance under analysis termed an "analyte" which reagent upon contacting a liquid sample containing the analyte effects formation of a colored material or other detectable change in response to the presence of the analyte. Other systems depend on a dry system such as pH papers and the like, where the paper or other highly absorbent carrier is impregnated with a material which is chemically reactive or responsive in contact with the liquid containing the analyte and generates a color or other type of change. Depending upon the selection of responsive material, the change is usually qualitative or at best semi-quantitative. For diagnostic chemical analysis wherein the testing of biological fluids such as blood, plasma, urine and the like are utilized, it is preferable to produce highly quantitative results rapidly and conveniently. Also, it is desirable to precisely control and monitor the amount of liquid specimen that is subjected to the test. This is important especially in tests which involve machine reading of test substrates where it is necessary that a calibrated amount of the test specimen is exposed to the test substrate so that the proper reaction will take place and that any interference with optical detection or other detection of color changes is avoided.

A variety of devices and methods have been developed for transporting liquid in a controlled and predetermined flow pattern. Many of such items have been concerned with uncontrolled and undirected capillary flow of the liquid across surfaces. Some problems that have been encountered with uncontrolled flow include formation of trapped air pockets and incomplete wetting of certain portions of the surface. Air pockets create problems when the test device is examined through a microscope or other automatic methods because the examination of the liquid and/or the wetted surfaces results in different test data being collected. The examinations and automated systems are based on a presumption of the presence of the liquid in the scanning area and therefore the absence of the liquid in the relevant scanning area will throw off the value of the reading and will give an unreliable result. The problem of air pockets is a common occurrence particularly when dealing with configurations which have sharp corners and synthetic resin surfaces which are generally hydrophobic.

A variety of different types of liquid transport devices have been developed in the prior art including that shown in Columbus, U.S. 4,233,029, which describes a device containing a means for directing capillary flow along predetermined paths by use of grooves in the opposed surfaces of a capillary chamber.

Another configuration for the transport of a liquid test specimen is shown in Columbus, U.S. 4,254,083, which provides for an exterior drop receiving surface containing a particular opening configuration which is intended to facilitate the centering of the drop.

Buissiere et al., U.S. 3,690,836, describe a device consisting of a capillary space between two plastic sheets which are sealed in a continous perimeter and which enclose an uncompressed absorbent material which fills the capillary space. At least one opening at the top sheet provides for access to the reaction chamber.

A liquid transport device which provides for diversion of capillary flow into a second zone is shown in Columbus, U.S. 4,473,457. The device has two pathways for flow of the specimen and permits the introduction of two different specimens through two apertures. The two liquids then will flow towards and into a common area. The configuration of the structure of Columbus permits potentiometric determinations to be made. See also Columbus, U.S. 4,302,313, which shows a device suitable for potentionmetric analysis of liquid ions. Special grooved surfaces under the member 36 are said to control capillary flow.

Another device is shown by Columbus, U.S. 4,271,119, which has a downstream diverting aperture in a wall member of a first capillary zone which provides capillary flow into a second capillary zone extending from that wall member.

Columbus, U.S. 4,323,536, discloses a multianalyte test device. Liquid flow control means are included such that liquid is confined to a plurality of flow paths

## Summary of the Invention

The present invention pertains to a means for volume metering of liquid samples onto a reactive surface in a capillary gap device of novel configuration. The device provides for a rapid and uniform distribution of a predetermined volume of a liquid test specimen onto a reactive surface for the determination of a particular component or components that may or may not be present in the liquid test specimen. The volume of sample applied to the surface is limited to that amount which resides within a sample capillary gap or sample reading chamber. Excess sample is wicked into an overflow capillary chamber by a proportioning channel which modifies the rate of flow thereby permitting the device to accommodate excess volume above the minimum required for the sample reading chamber without requiring any measuring, blotting, wipe-off or rinsing.

Major problems associated with dry reagent films and papers are solved by the present invention; namely, application of a uniformly distributed sample onto a reactive surface and control of the sample volume.

The aforementioned advantages permit one to choose a sample volume appropriate to the chemistry and reactivity of the reactive material by varying the thickness of the capillary gap and hence the total volume entrained by the sample reading chamber of the device.

Excess fluid beyond the capacity of the capillary overflow chamber may be absorbed by filter paper or other absorbent medium attached to the device adjacent to or directly over a suitable opening of the overflow chamber.

Other features and advantages of the present invention will become apparent from the following detailed description taken in conjunction with the drawings.

Brief Description of the Drawings

Figure 1 is a perspective view of one embodiment of the capillary gap device of the present invention;

Figure 2 is a top view of the top layer of one embodiment of the capillary gap device of the present invention showing the openings or ports formed therein;

Figure 3 is a top view of the spacer layer of one embodiment of the capillary gap device of the present invention showing the chamber formed therein;

Figure 4 is an end view of the capillary gap device taken along lines 4-4 in Figure 1;

Figure 5 is a perspective view of another embodiment of the present invention;

Figure 6 is a top view of an alternative arrangement of the present invention;

Figure 7 is a top view of another embodiment of the invention;

Figure 8 is an end view of the embodiment shown in Figure 7 taken along lines 8-8;

Figure 9 is a perspective view of another embodiment of the invention;

Figure 10 is an exploded view of an alternative arrangement of the present invention;

Figure 10A is a perspective view of the upper layer shown in Figure 10;

Figure 11 is a schematic side view of another embodiment of the invention showing a particular configuration for a spacer layer;

Figure 12 is a graph of the reactivity per second and describes the effect of format design on the dose response film curve for a glucose sensitive film; and

Figure 13 shows a comparison of test precision for an open and a capillary gap format device.

Major problems associated with dry reagent films and papers are solved by the device of the invention. It is difficult utilizing prior art materials to obtain an application of an uniformly distributed sample over a finite surface area of a test surface. In many instances, the sample will not travel into the sample chamber under proper conditions, too much sample is in contact with the sample chamber or not enough of the liquid is in contact therewith. The present invention permits close and carefully monitored control of the sample volume so that only a previously determined calibrated amount of liquid to be analyzed will be in contact with the test surface. Therefore, these advantages permit one to choose a sample volume that is appropriate to the particular test that is being carried out taking into consideration the nature of the fluid that is being tested and the nature of the reagent film. The present invention can be fabricated in various different dimensions and therefore the thickness of the capillary gap can be varied as desired. Hence, the capillary gap devices can be made in various sizes depending upon the total volume of the sample that is desired to be entrained of the sample. This will depend upon the particular means chosen for reading the results; i.e., either automatic or visual means. The device of the present invention provides a means for dealing with the problem of excess sample so that any excess liquid does not interfere with obtaining a proper reading. Thus, in accordance with the invention, excess fluid flows into an overflow chamber through an overflow proportioning channel and, if necessary, out an overflow port or opening. If desired, some sort of absorbing material can be either attached to the device or adjacent thereto so as to absorb the excess liquid.

It is important to note that the present invention is not simply a fluid transport or spreading device but instead is a volume metering device which is designed to accommodate a range of sample volumes from a minimum of about 5 to 10 micro liters up to about 100 to 200 micro liters without washing or wiping off the excess liquid.

It is therefore an important feature of the present invention to provide a fluid metering device in a capillary gap structure containing a sample chamber of a defined volume.

It is a further feature of the present invention to provide a capillary gap device which has a capillary lock for air release and prevention of backflow into the sample application port.

A further feature of the present invention is to provide for proportioned flow of the sample fluid into a capillary overflow chamber which accommodates the liquid volume beyond the minimum required to fill the sample chamber. The volume of the sample chamber can be varied to accommodate excess sample as well when this is compatible with the chemistry of the reagent film that is chosen.

A further feature of the present invention is to provide for complete removal of sample fluid from the sample application port by capillary action. Thus, no washing or wiping is required nor does any excess sample fluid remain exposed in the aperture. In operation in accordance with the invention, any residual sample which remains in the sample application port would be drawn into the overflow chamber and the sample application port is thereby evacuated. Any excess overflow beyond the capacity of the capillary overflow chamber can be taken care of by utilizing an absorbent pad as an optional feature of the invention.

A still further feature of the present invention is a capillary gap device wherein no exchange can occur between liquid in the sample chamber and liquid in the overflow chamber because the creation of an air gap in the overflow proportioning channel. This can enchance the end point chemistries which are carried out in the sample chamber depending upon the particular nature of the reactive material.

Detailed Description of Invention

Described in further detail, the device of this invention features a capillary transport for biological liquids particularly whole blood which can be visually inspected or subjected to an automated system for sample reading. The device can be utilized with any liquid in drop form wherein a certain amount of the liquid is to be carried through an opening port from an exterior surface or source to transport means for transporting the liquid to the reactive surface or test substrate. The device of the present invention features the metering of the fluid into a capillary gap containing a sample chamber of a defined volume.

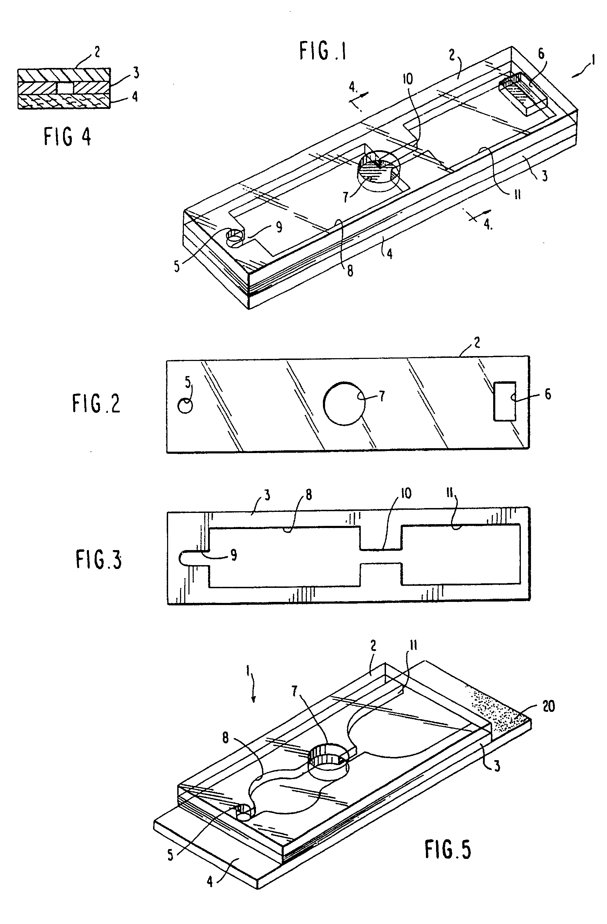

The device of the present invention as represented by the embodiment of the invention illustrated in Figure 1 includes a capillary device 1, of generally rectangular geometry, having a major axis and a minor axis and including a top layer 2, a spacer layer 3, and a bottom layer 4. The bottom layer comprises reagent detection means. The top layer, which may or may not be clear and transparent, is illustrated as being a transparent plastic material and has formed in the surface thereof, an air relief port 5, an overflow port 6 and a sample application or sample introduction port 7. It will be understood, however, that the openings or ports can be located on the end or bottom of the device provided the ports do not interfere with the operation of the device.

The spacer layer 3 which defines the internal capillary gap or chamber generally coincides in dimension with the top layer 2 and bottom layer 4 and has formed therein a sample chamber 8 with a capillary lock area 9 coincident with the space below the air relief port 5 in the top layer 2. While the capillary gap can vary, it generally ranges from 0.007 to 0.08 cm. Also formed in the spacer layer is an overflow proportioning channel 10 connecting the sample chamber 8 to the overflow chamber 11. The overflow chamber 11 is located beneath and connects with the overflow port 6 in the top layer 2.

The reagent layer 4 can comprise a mono or multilayer reagent material or a substrate of any conventional type as described in further detail hereafter.

The clear top layer 2 can be cut or stamped from a suitable material, such as Trycite, a polystyrene material. Other plastic substances are polyolefins, polyamides, polyester and the like as will be apparent to those skilled in the art. Any suitable material can be used provided it is inert to the test specimens and sufficiently strong and stable.

The spacer layer can be formed of any suitable material such as a thermoplastic material which, upon heating, can be utilized to adhere the top layer 2 to the reagent bottom layer 4. Any suitable dimensionally stable thermoplastic material can be used for this purpose such as polyamides, polyethylene, polypropylene, PVC, copolymers thereof and the like. Alternatively, a separate adhesive composition can be interposed between the several layers in a sufficient amount to adhere all layers together in a secure and permanent fashion. Such adhesive substances are known in the art and any suitable one can be used provided it does not react with any test specimens.

The dimensions of the capillary gap device can vary widely but it has been found that a particularly useful dimension is a ratio of about 3 to 1 length vs. width; that is, 2.5 to 7.5 cm (about 1 to 3 inches) in length by 0.8 to 2.4 cm (1/3 to 1 inch) in width. A particularly useful configuration is 3.7 cm (1.4 inches) in length by 1 cm (0.4 inches) in width. The thickness of the test device can also vary and generally is 0.05 to 0.25 cm (about 0.02 to 0.1 inch). Typically, the three layers can include (1) a 0.02 cm (0.008 inch) thick plastic such as polystyrene cover, (2) a plastic and adhesive spacer layer which can be approximately 0.02 cm (0.006 inch) thick with approximately shaped cutouts for fluid containment and (3) a bottom reactive layer which consists of a gelatin based coating on a polyethyleneterephthalate film base; e.g. 0.02 cm (0.008 inch) thick.

In Figure 2, there is shown the embodiment of the top layer shown in Figure 1 showing the air relief port 5, the overflow port 6 and the sample application port 7. The dimensions of these openings can vary as well as their geometry. Most conveniently, they are circular openings because they can easily be drilled or punched out in a thin sheet. However, Figure 2 shows that the overflow port is rectangular, a shape that can be punched out with a suitable die. The air relief port 5 can be relatively small, say, about 0.08 cm (0.03 inch) in diameter located on the center major axis of top layer 2 and located in small distance from the end, for example 0.06 cm (.025 inch), with the center of the circle being at about 0.1 cm (0.04 inch) from the end. Thus, if the width of the top cover is 1 cm (0.4 inch) the center line of air relief port 5 will be at 0.5 cm (.2 inch) in from the long edge. The rectangular overflow port 6 is located a small distance (e.g. 0.1 cm or 0.04 inch) from the end opposite that where air relief port 5 is located. The dimensions of the overflow port can vary, but for example 0.3 by 0.5 cm (0.1 by 0.2 inch) has been found to be suitable. The overflow port, like the air relief port, is normally centered on the major axis of the test device.

The sample application port 7 can also be circular in shape and typically is larger in open area than the air relief port 5. For example, the diameter of the sample application port is customarily 3 to 4 times greater than the diameter of the air relief port 5. Thus, based on the above discussed dimensions, a suitable dimension for the application port is 0.3 cm (0.1 inch) in diameter. The location of sample application port 7 can be in the center of the device although it need not necessarily be centered. The important thing is that it be positioned so as to be in communication with the sample chamber 8 and contiguous to the overflow proportioning channel 10.

Figure 3 shows a top view of the spacer chamber layer 3 with the sample chamber 8 and the overflow chamber 11 connected by the overflow proportioning channel 10 and also shows the capillary lock 9. The several different areas in spacer layer 3 are all located symmetrically with respect to the major axis of the device. The capillary lock 9 and the overflow proportioning channel are relatively narrow compared to sample chamber 8 and overflow chamber 11. For example, the lock and channel can be 0.08 cm (0.03 inch) wide while the width of the chambers is 0.8 cm (0.03 inch), i.e. about 10 to 1, although the exact size and relative size can vary. In general, ratios between 2 to 1 and 50 to 1 can be employed. The spacer chamber can also be formed of a thermoplastic resin that will function as adhesive as well to thereby enable fusion of the three layers together to bond them into a unit. Alternatively, a conventional adhesive can be used to bond the several layers together. In still a further variation, ultrasonic or laser means can be used to achieve proper bonding. In a yet further variation, a mechanical clamp can be used to maintain the layers together.

Figure 4 is a cross-sectional end view of the device showing the top, spacer and bottom layers. The bottom layer 4 is the reagent containing layer and can be a reagent impregnated fibrous layer or a gelatin coated layer. Any one of a wide variety of reagent layers or substrates, including powders, can be used in accordance with the invention. Many conventional reagent systems are available and the specific choice of which reagent selected will depend upon the tests to be carried out.

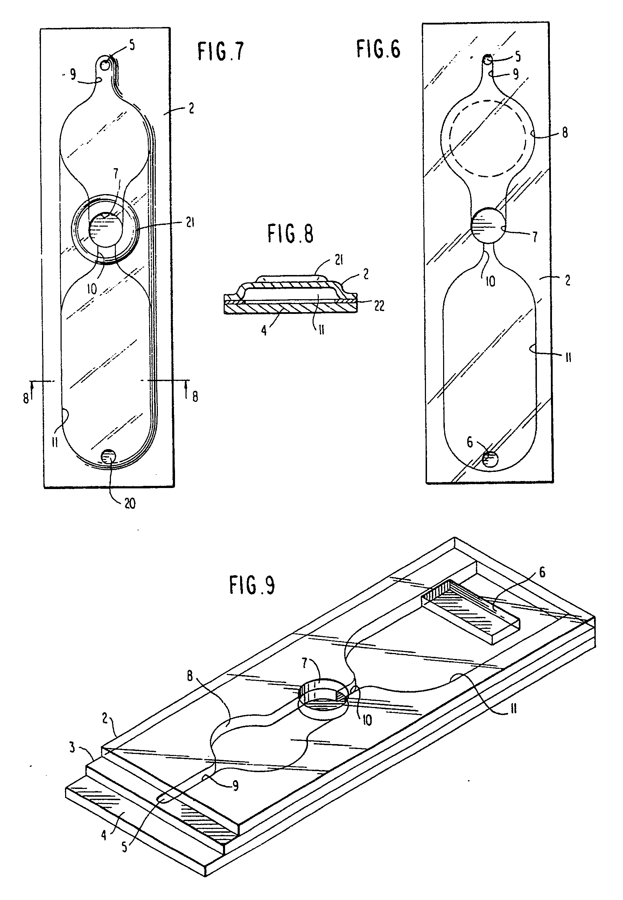

Figure 5 is a perspective view of a different embodiment of capillary gap device 1 of the invention composed of three layers; i.e., a transparent top or cover layer 2, a spacer layer 3 and a reagent film layer 4. In this embodiment, reagent film layer 4 has an extended portion 20 upon which an absorbent material to absorb the overflow of liquid from the overflow chamber 11 can be placed. In this variation, there is no overflow port on the top layer. Instead, the overflow flows out of the end of the device directly into extended portion 20 of the reagent layer 4. Further, in this embodiment, the chamber walls are contoured in curved shape which avoid sharp corners.

Figure 6 shows a top view of still a further embodiment of the invention with the air relief port 5, overflow port 6 and sample application port 7. The chamber for the sample 8 and for the overflow 11 are contoured, as may be seen when viewed through the transparent top 2, so that sharp corners are avoided.

Figure 7 shows another embodiment of the invention and is a top view of the capillary gap device. The top layer 2 and a reagent layer 4 (Figure 8) are joined together by an adhesive (not shown). No spacer layer is present in this embodiment. The top sheet has shaped therein the air relief port 5, capillary lock 9, sample chamber 8, sample application port 7, proportioning channel 10, overflow chamber 11 and air relief port 20. In addition, it has a raised ring 21 formed around the sample application port 7 to enable centering of the liquid drop of sample, to assist in the guidance of the liquid sample drop into the sample application port 7 and to aid in removing sample from the applicator, e.g., a finger.

Figure 8 shows the embodiment of Figure 7 in cross-section. In this embodiment, the top layer is molded to form therein upwardly extended chambers 8 and 11 while the reagent layer is flat. Between the upper layer 2 and the reagent layer 4 an adhesive material 22 can be used to bond the two layers together. The ring 21 is shown surrounding the sample port 7. It is understood that the reagent material can also have an adhesive layer around the perimeter thereof to enable bonding or heat sealing to the top layer without the use of a separate adhesive material.

A further embodiment of the invention is shown in Figure 9 in perspective view and consists of the transparent cover layer 2 having formed therein the sample application port 7 and overflow port 6. The spacer layer 3 which has the chambers formed therein can be formed of a suitable material and has the capillary lock 9, sample chamber 8, overflow metering proportioning channel 10 and overflow chamber 11 formed therein. By staggering the layers, the terminal end of the capillary lock 9 can extend out beyond the end of the cover layer 2 and thereby provides the air release ports. The reagent layer 4 can be any suitable reagent material.

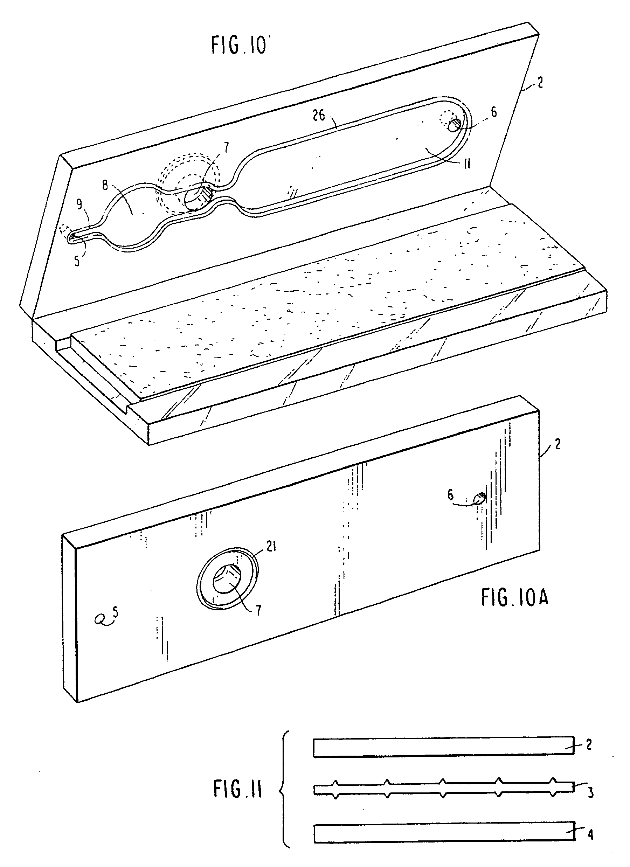

A further embodiment of the invention is shown in Figure 10 which shows an exploded view of a capillary gap device of the present invention. The device is formed of a top surface layer 2 which is transparent and which has the air relief port 5, the overflow port 6 and the sample introduction port 7 formed therein. The top layer 2 has formed in the underside thereof the overflow chamber 11, sample application chamber 8 and the capillary lock area 9. It can also have a sealing ridge or a slightly thicker portion 26 outlining the edges of the chambers and channels. The bottom layer is provided with a channel or groove 24 for retaining reagent. The bottom layer is made of a clear transparent plastic or other material to permit viewing through the clear surface. The longitudinal groove for the reagent is slightly shallower than the film thickness. The bottom layer has raised longitudinal edge surfaces which can be formed of a heat sealable plastic or can have an adhesive formed thereon which permits the welding or adhesion of the bottom layer to the top layer. A suitable adhesive can also be applied between the top surface and the bottom layer. Preferably, the top layer can be formed of a thermoplastic material which when subjected to heating or ultrasonic welding can result in fusion of the top surface together with the bottom surface.

Figure 10A shows the upper surface of the top layer 2 depicted in Figure 10. In this embodiment, the sample application port 7 is provided with a raised ring 21 which aids in centering the drop of sample for introduction into the device.

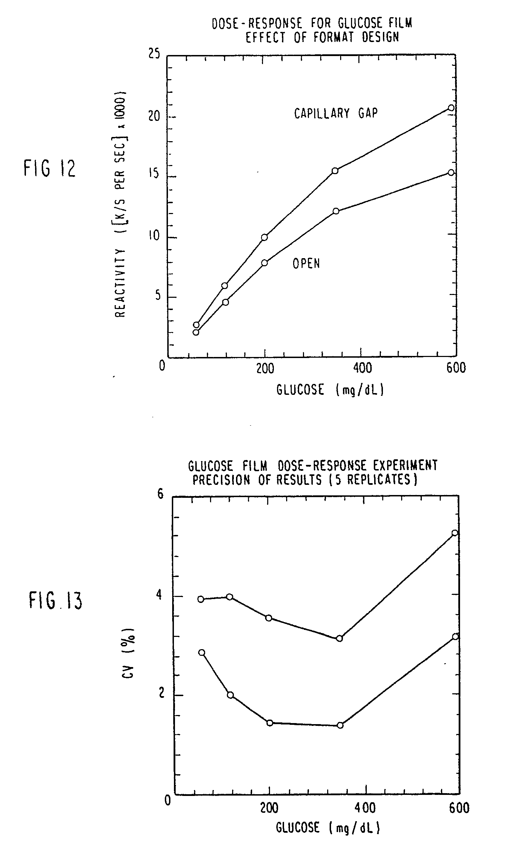

Figure 11 is a schematic side view of the three elements used to form a capillary device of the invention. The top 2 and bottom, or reagent, layer 4 are as described above. The spacer layer 3 is formed of a plastic material that is heat deformable and is punched out or molded to form channels and chambers. The top and bottom surfaces of layer 3 has dimples, pyramids or projections formed thereon to provide for good welding and bonding together when the layers are united.

Figure 12 shows the results of a dose response experiment where the glucose film in the capillary gap format is compared to a currently used open format; that is, where an open drop of blood is deposited on a glucose film confined to a small area by the hole in a plastic covering layer. The reactivity of the film in the capillary gap format is significantly higher than that in the open format. One explanation may be evaporative cooling of the exposed sample in the open format which lowers the sample temperature by about $2.5°$ C. Assay precision can be improved by a factor of as much as two in the capillary gap format as evidenced by lower coefficients of variation (CV) at each glucose concentration, as shown in Figure 13.

In accordance with the invention as shown, for example, in Figure 1, a capillary gap device 1 can be constructed which has a multilayer reagent film as the bottom layer 4 wherein the film base is the lower most layer, a layer of double sided adhesive plastic film as the spacer layer 3 and a top covering layer 2 of plastic. The shape of the sample chamber 8 and the overflow chamber 11 and overflow proportioning channel 10 and capillary lock channel 9 is determined by cutting out voids in the adhesive layer and access to these chambers is provided by the openings 5, 6 and 7 in the plastic cover layer 2.

As an alternative, the adhesive pattern in accordance with the desired configuration of chambers and channels can be printed or screened onto the inner surface of the covering layer in whatever thicknesses required.

It should be noted that the rectangular chamber shapes as shown in Figure 1 can be formed by conventional tooling for punching out the adhesive film. A still further preferred embodiment is shown in Figure 5 which shows rounded contours. Rounded contours are usually achieved by molding techniques.

A further alternative method of manufacture resides in forming the capillary channels and chambers directly in the plastic covering layer. This is shown in Figure 8. This embodiment of the invention permits complex, smoothly contoured shapes to be formed in an appropriate thermoplastic material by applying heat in combination with vacuum or pressure and an appropriately shaped mold or dye. Adhesive means can then be employed to attach the formed plastic covering layer to the reagent film without significantly adding further to the thickness of the device. It should be noted that other device geometries employing the same general principles can be adapted to capillary gap devices.

In operation, a sample of blood or fluid containing the desired analyte such as glucose, for example, is applied to the sample application port. Typically, the device can handle a minimum sample volume of about 20 micro liters. Any excess volume remains in the sample application port for a brief period of time until it is removed by capillary action into the overflow chamber. This usually occurs within about 20 seconds, at which time the sample application port is completely evacuated of any specimen. Initial filling of the sample chamber requires less than a few seconds, typically about 2 seconds, and it is limited only by the rate at which the sample is applied to the sample application port.

In a further embodiment of the invention shown in Figure 11, the capillary gap device is formed of a three layer construction. The top layer 2 is a transparent plastic such as polystyrene. The spacer layer 3 is formed of a thermoplastic material and contains the internal geometrical configuration of channels and chambers (not shown). Also, the upper and lower surfaces of layer 3 are formed with dimples, projections and/or pyramid shaped protrusions to provide energy directors for welding which can pierce the gelatin layer of the reagent film bottom layer 4. Typically, the bottom layer 4 can be formed of a reagent film such as a gelatin coated layer where the gelatin faces the top surface. When formed into a composite and welded together by means such as by ultrasonic welding, the spacer layer 3, which is formed of a thermoplastic material fusible under the conditions utilized in the ultrasonic welding operation fuses to the top layer 2 and bottom layer 4 to provide a uniform and secure seal between the several members. In this way, a large sheet of material can be formed and then cut by ultrasonic or laser welding into the desired sizes. Alternatively, the devices can be welded and cut by ultrasonic or laser means at the same time.

As explained above, the main purpose of the device of the invention is to provide metering of a defined sample volume to a reactive surface or path without requiring any measurement, washing or wiping of sample. In the device shown herein, excess sample liquid is drawn into the overflow chamber at a rate determined by the size of the proportioning channel. Furthermore, in the device of this invention, the fluid connection between the sample chamber and the overflow chamber is broken once the overflow chamber has removed excess sample fluid. The capillary lock serves to prevent backflow. The top and bottom inner surfaces of the device should be made of such materials that the wetting angles are similar. One manner of achieving this is to coat one or all surfaces with surface active agent.

Any reagent can be used for purposes of the invention provided the reagent contains at least one material that is interactive or responsive in the presence of an analyte positive liquid present in the specimen to be tested. In various instances, the interactive material can be responsive to an analyte or a precursor or a reaction product of an analyte to effect the production of a change within the element by virtue of the reactive material. Thus, the reagent layer is permeable to at least one component present in the sample and is preferably of a substantially uniform permeability to those substances which are tested for in the test specimen. The term "permeable" as used herein indicates the ability of a substance or the layer to be penetrated effectively by a material carried in the test liquid. Uniform permeability of a layer refers to permeability such that when a homogeneous liquid is provided uniformly to a surface of the layer, identical measurements of the concentration of such liquid within the layer can be made through different regions of the surface of the layer permitting substantially the same results, within about 10% to be obtained for each measurement. Because of the uniform permeability, undesirable concentration gradients can be avoided in the reagent layer. Such reagent layers are well known in the art and any suitable one can be used for purposes of the invention.

One or more surface active agents can be utilized to coat the interior of the chambers in the device so as to permit and facilitate liquid transport of the specimen into the sample chamber and the excess liquid overflow compartment. A broad variety of ionic and nonionic surface active agents can be used for this purpose. For example, the well known ionic surface active agents such as alkali metal and alkyl sulfates, wherein the alkyl group has more than 8 carbon atoms such as sodium dodecyl sulfate, can be utilized. Nonionic surface active agents such as the many examples set forth in McCutcheon's "Detergents and Emulsifyers" 1974, North American Edition by the Allured Publishing Corporation can be used.

Analytical elements of the present invention can be adapted for use in carrying out a wide variety of chemical analyses, not only in the field of clinical chemistry but in chemical research and in chemical process control laboratories. Theoretically, the invention can be used under low gravity conditions, including those conditions found in outer space. The invention is well suited for use in clinical testing of body fluids, such as blood, blood serum and urine, since in this work a large number of repetitive tests are frequently conducted and test results are often needed a very short time after the sample is taken. In the field of blood analysis, for example, the multilayer element can be adapted for use in carrying out quantitative analyses for many of the blood components which are routinely measured. Thus, for example, the element can be readily adapted for use in the analysis of such blood components as urea nitrogen, chloride, glucose and uric acid, as well as many other components by appropriate choice of test reagents or other interactive materials. In analyzing blood with an analytical element of this invention, the blood cells may first be separated from the serum, by such means as centrifuging, and the serum applied to the element. However, it is not necessary to make such separation, especially if reflective spectrophotometric analysis techniques are used to quantify or otherwise analyze the reaction product formed in the element as whole blood can be applied directly to the element and the blood cells filtered out through the action of a filtering layer. The presence of these cells on the element will not interfere with spectophotometric analysis if it is carried out by reflection techniques.

Reagent layers in the devices of the invention can be permeable or porous to samples obtained from a metering or spreading layer or to reaction products thereof. A multilayer reagent layer can include a metering or spreading layer. As used herein, the term "permeability" includes permeability arising from porosity, ability to swell or any other characteristic. Reagent layers can also include a matrix in which an interactive material is distributed, i.e., dissolved or dispersed. The choice of a matrix material is, of course, variable and dependent on the intended use of the element. Desirable matrix materials can include hydrophilic materials such a hydrophilic colloids, preferably in the form of a water-swellable gel. Useful hydrophilic materials include both naturally occurring substances like gelatin, gelatin derivatives, hydrophilic cellulose derivatives, polysaccharides such as dextran, gum arabic, agarose and the like, and also synthetic substances such as water-soluble polyvinyl compounds like polyvinyl alcohol and polyvinyl pyrrolidone, acrylamide polymers, etc. Organophilic materials such as cellulose esters and the like can also be useful, and the choice of materials in any instance will reflect the use for which a particular element is intended.

To enhance permeability of the reagent layer if not porous, it is often useful to use a matrix material that is swellable in the solvent or dispersion medium or liquid under analysis. The choice of a reagent layer matrix in any given instance may also depend in part on its optical or other properties that could affect radiometric detection. The reagent layer should be non-interfering with respect to any intended result detection procedure. Also, it may be necessary to select material that is compatible with the application of an adjacent layer, such as by coating means, during preparation of the element. As an example, where the formation of discrete layers is desired and the intended analysis will be of aqueous liquids, it may be appropriate to select an essentially water soluble matrix for the reagent layer and essentially organosoluble or organodispersible ingredients for an adjacent layer, such as a spreading layer. In such manner, mutual solvent action is minimized and a clearly delineated layer structure can be formed. In many cases, to facilitate the formation within the spreading layer of such apparent concentrational uniformity as is discussed herein, it may be desirable to have the reagent layer of lower permeability than is the spreading layer itself. Relative permeability can be determined by well-known techniques.

In various embodiments of the present elements, the interactive material in the reagent layer interacts with the analyte material to which the element is responsive. In other embodiments, the interactive material can interact with a precursor or a product of an analyte, as appropriate in view of the analysis mechanism of choice. The term "interactive" is meant herein to refer to chemical reactivity such as reactivity by addition, protonation, decomposition, etc., activity as in the formation of an enzyme-substrate complex, activity as is produced as a result of enzymatic action as well as any other form or composition of chemical or physical interaction able to produce or promote within the element, such as in the reagent layer, the formation of a radiometrically detectable change, i.e., one that is detectable by suitable measurement of light or other electromagnetic radiation.

The distribution of interactive material can be obtained by dissolving or dispersing it in the matrix material. Although uniform distributions are often preferred, they may not be necessary if the interactive material is, for example, an enzyme. Reagents or other interactive materials soluble in the liquid under analysis can advantageously be immobilized in the reagent layer, particularly when the reagent layer is porous.

The particular interactive materials that can be distributed within a reagent layer will depend on the analysis of choice. In the case of glucose analysis, a ferricyanide compound can be used. Glucose reacts with ferricyanide and the reaction causes a decrease in the yellow color characteristic of ferricyanide. In testing for uric acid, as in blood of serum, a mixture of copper sulfate and neocuproine can be distributed in the reagent layer matrix. Uric acid causes reduction of cupric copper to cuprous copper that can complex with the neocuproine to form a colored material that is proportional in density to the concentration of uric acid in the analyzed liquid. In the case of many analyses, enzymes such as oxidase materials like glucose oxidase can desirably be included as interactive materials within a reagent layer of an element intended for the analysis of an analyte that is a substrate for such enzyme. As an example, an oxidative enzyme can be incorporated into a reagent layer together with peroxidase or a peroxidative material and a chromogen material or composition that, upon oxidation in the presence of peroxidase (or another substance having peroxidative activity) and the hydrogen peroxide formed upon interaction of an oxidase and its substrate, provides a dye or other detectable species. An interactive material that, upon appropriate interaction, provides directly a detectable change in the element is also termed an indicator. A plurality of materials, including at least one interactive material, that act together to provide a detectable change in the element is collectively termed an indicator composition.

Chromogenic materials or compositions that contain an oxidizable moiety and can provide a detectable species include certain dye providing materials or compositions. In one aspect, a dye can be provided by a compound, that when oxidized, can couple with itself or with its reduced form to provide a dye. Such autocoupling compounds include a variety of hydroxylated compounds such as orthoaminophenols, alkoxynaphthols, 4-amino-5 pyrazolones, cresols, pyrogallol, guaiacol, orcinol, catechol phloroglucinol, p,p-dihydroxydiphenyl, gallic acid, pyrocatechoic acid, salicyclic acid, etc. Compounds of this type are well known and described in the literature, such as in The Theory of the Photographic Process, Mees and James Ed. (1966), especially at Chapter 17. In another aspect, the detectable species can be provided by oxidation of a leuco dye to provide the corresponding dyestuff form. Representative leuco dyes include such compounds as leucomalachite green and leucophenolphthalein. In yet another aspect, the detectable species can be provided by dye providing compositions that include an oxidizable compound capable of undergoing oxidative condensation with couplers such as those containing phenolic groups or activated methylene groups, together with such a coupler. Representative such oxidizable compounds include such compounds as benzidene and its homologs, p-phenylenediamines, p-aminophenols, 4-aminoantipyrine, etc. A wide range of such couplers, including a number of autocoupling compounds, is described in the literature.

Alternatively, some materials or compositions contain a reducible moiety that can provide a radiometrically detectable compound. This compound may be either formed or destroyed by the reductive process. Examples of the former type of chemistry may be found in the direct radiometric measurement, usually at a wavelength of 340 nanometers, of reduced nicotinamide adenine dinucleotide (reduced NAD) as may be formed by the reaction of glucose with glucose dehydrogenase and NAD, as well as in the further reaction of reduced NAD with diaphorase and any one of a variety of tetrazolium compounds and subsequent radiometric detection of the resulting formazan. A specific example of such a tetrazolium is iodonitrotetrazolium chloride (INT) which, upon reduction, produces a red colored formazan. 2,6-Dichlorophenolindophenol is an example of a compound whose color is destroyed upon reduction.

The test element layer can be optionally transparent so that it can be read from the bottom as desired. This layer can have a variety of binder compositions, for example, gelatin, cellulose acetate butyrate, polyvinylalcohol, agarose and the like, the degree of hydrophilicity of which depends on the material selected. Gelatin is generally suitable to act as a layer when testing blood since it acts as a wetting agent to provide for an unique liquid flow through the capillary zone.

Additional layers can also be arranged to provide for a variety of chemistries or function and to provide a function in its own layer or in combination with another reagent layer. Thus, a plurality of layers can be utilized. Filtering, registration or mordanting functions can be provided for by additional layers. Prior art is replete with examples of multiple layers such as is found in U.S. Patents 4,042,335 and 4,050,898, for example.

As used herein, the terms "reagent" and "reagent layer" mean a material that is capable of interaction with an analyte, a precursor of an analyte, a decomposition product of an analyte or an intermediate. For example, one of the reagents can be a radiometrically detectable species which is mobilized by the analyte from a radiometrically opaque portion or layer of the element to a radiometrically transparent portion or layer such as a registration layer.

Interaction between the reagents of the reagent composition and the analyte is therefore meant to refer to chemical reaction, catalytic activity as in the formation of an enzyme substrate complex or any other form of a chemical or physical interaction including physical displacement that can produce ultimately a radiometrically detectable signal in the element.

The present invention enables one to monitor the filling of the sample chamber by use of a white or light colored reagent film and an opaque or black cover sheet and then observing the appearance of sample through the air release port. Superior temperature control characteristics are achieved by the present invention relative to noncapillary as well as most other capillary devices because virtually no fluid sample remains exposed to the atmosphere. This means that the invention almost completely eliminates evaporative cooling effects. Once a device is filled with a sample, it is insensitive to orientation. No air filled spaces remain in the sample chamber and the sample cannot leak out. Initial filling should be performed on a reasonably level surface to ensure an even distribution of the sample. The analyte sensitive surface contained in the device is protected from environmentally caused damage and degradation since it remains enclosed except for the apertures in the top covering layer.

## Claims

1. A flow metering capillary device for controlled fluid flow comprising two oppositely disposed surfaces defining a capillary zone which will maintain a capillary flow of liquid therebetween, said oppositely disposed surfaces having formed therebetween a sample test chamber (8) and an overflow chamber (11), the sample test chamber (8) including reagent means for interacting with test liquid introduced into said device to provide a detectable response, and at least one relief port for venting air, characterized in that it comprises:

   an overflow proportioning channel (10), positioned between said sample test chamber (8) and said overflow chamber (11), adapted to convey excess test liquid into the overflow chamber (11) without the application of externally generated pressure, and

   a test liquid introduction port (7) positioned in communication with said sample test chamber (8) and contiguous to the overflow proportioning channel (10).

2. The flow metering capillary device of claim 1 which includes means for removing excess test liquid from said overflow chamber.

3. The flow metering capillary device of claims 1 or 2 wherein the reagent means is a reagent impregnated responsive layer.

4. The flow metering capillary device of any of claims 1 to 3 which additionally contains an absorbent wicking layer.

5. The flow metering capillary device according to any of claims 1 to 4 wherein the two oppositely disposed surfaces are separated by a spacer means.

6. Use of the flow metering capillary device according to any of claims 1 to 5 in the determination of an analyte in a test liquid.

## Revendications

1. Dispositif capillaire de mesure d'écoulement destiné à un écoulement de fluide régulé, comprenant deux surfaces disposées de manière opposée, définissant une zone capillaire qui maintient un écoulement capillaire de liquide entre ces surfaces, lesdites surfaces disposées de manière opposée délimitant une chambre analytique d'échantillon (8) et une chambre de trop-plein (11), la chambre analytique d'échantillon (8) comprenant des moyens réactifs destinés à interagir avec un liquide analytique introduit dans ledit dispositif pour engendrer une réponse détectable, et au moins un orifice de décharge destiné à l'évacuation d'air, caractérisé en ce qu'il comprend :

   un canal de dosage de trop-plein (10), placé entre ladite chambre analytique d'échantillon (8) et ladite chambre de trop-plein (11), apte à véhiculer le liquide analytique en excès dans la chambre de trop-plein (11) sans l'application d'une pression engendrée extérieurement, et
   un orifice d'introduction de liquide analytique (7) placé en communication avec ladite chambre analytique d'échantillon (8) et contigu au canal de dosage de trop-plein (10).

2. Dispositif capillaire de mesure d'écoulement suivant la revendication 1, qui comprend des moyens pour éliminer le liquide analytique en excès de ladite chambre de trop-plein.

3. Dispositif capillaire de mesure d'écoulement suivant la revendication 1 ou 2, dans lequel les moyens réactifs consistent en une couche sensible imprégnée d'un réactif.

4. Dispositif capillaire de mesure d'écoulement suivant l'une quelconque des revendications 1 à 3, qui contient en outre une couche absorbante à effet de mèche.

5. Dispositif capillaire de mesure d'écoulement suivant l'une quelconque des revendications 1 à 4, dans lequel les deux surfaces placées de manière opposée sont séparées par un élément d'espacement.

6. Utilisation du dispositif capillaire de mesure d'écoulement suivant l'une quelconque des revendications 1 à 5 dans le dosage d'un analyte dans un liquide analytique.

## Ansprüche

1. Durchflussmesskapillarvorrichtung für kontrollierten Fluidfluss mit zwei gegenüberliegend angeordneten Oberflächen, die eine Kapillarzone definieren, die einen Kapillarfluss an Flüssigkeit dazwischen aufrecht erhält, wobei die gegenüberliegend angeordneten Oberflächen dazwischen eine Probentestkammer (8) und eine Überflusskammer (11) angeordnet aufweisen, wobei die Probentestkammer (8) Reagensmittel zur Wechwselwirkung mit der Testflüssigkeit enthält, die in die Vorrichtung eingebracht wird, um eine ermittelbare Antwort zu schaffen, und mit zumindest einer Entlastungsöffnung zum Luftventilieren, dadurch **gekennzeichnet**, dass sie enthält:

einen Überflussdosierungskanal (10), der zwischen der Probentestkammer (8) und der Überflusskammer (11) angeordnet ist, der angepasst ist, um überschüssige Testflüssigkeit in die Überflusskammer (11) ohne Beaufschlagung von aussen erzeugtem Druck zu transportieren; und

eine Testflüssigkeits-Einführöffnung (7), die in Verbindung mit der Probentestkammer (8) und angrenzend an den Überflussdosierungskanal (10) angeordnet ist.

2. Durchflussmesskapillarvorrichtung gemäss Anspruch 1, dadurch **gekennzeichnet**, dass sie Einrichtungen zur Entfernung überschüssiger Testflüssigkeit aus der Überflusskammer enthält.

3. Durchflussmesskapillarvorrichtung nach Anspruch 1 oder 2, dadurch **gekennzeichnet**, dass das Reagensmittel eine mit Reagens imprägnierte, ansprechende Schicht ist.

4. Durchflussmesskapillarvorrichtung nach einem der Ansprüche 1 bis 3, dadurch **gekennzeichnet**, dass sie zusätzlich eine absorbierende Dochtmaterialschicht enthält.

5. Durchflussmesskapillarvorrichtung nach einem der Ansprüche 1 bis 4, dadurch **gekennzeichnet**, dass die zwei gegenüberliegend angeordneten Oberflächen durch eine Abstandeinrichtung getrennt sind.

6. Verwendung der Durchflussmesskapillarvorrichtung nach einem der Ansprüche 1 bis 5 zur Bestimmung eines Analytes in einer Testflüssigkeit.

FIG 4

FIG.1

FIG.2

FIG.3

FIG.5

FIG.7

FIG.6

FIG.8

FIG.9

FIG.10

FIG.10A

FIG.11

FIG 12

DOSE-RESPONSE FOR GLUCOSE FILM
EFFECT OF FORMAT DESIGN

CAPILLARY GAP

OPEN

REACTIVITY ([K/S PER SEC] x 1000)

GLUCOSE (mg/dL)

FIG.13

GLUCOSE FILM DOSE-RESPONSE EXPERIMENT
PRECISION OF RESULTS (5 REPLICATES)

CV (%)

GLUCOSE (mg/dL)

15